(19) **Europäisches Patentamt / European Patent Office / Office européen des brevets**

(11) **EP 2 282 940 B1**

(12) **FASCICULE DE BREVET EUROPEEN**

(45) Date de publication et mention de la délivrance du brevet:
**25.12.2013 Bulletin 2013/52**

(21) Numéro de dépôt: **09761644.5**

(22) Date de dépôt: **03.06.2009**

(51) Int Cl.:
*B64G 1/24* (2006.01)     *B64G 1/50* (2006.01)
*G05D 1/08* (2006.01)     *B64G 1/44* (2006.01)
*B64G 1/36* (2006.01)     *B64G 1/10* (2006.01)

(86) Numéro de dépôt international:
**PCT/EP2009/056784**

(87) Numéro de publication internationale:
**WO 2009/150081 (17.12.2009 Gazette 2009/51)**

(54) **PROCÉDÉ DE COMMANDE D'ATTITUDE DE SATELLITE ET SATELLITE COMMANDÉ EN ATTITUDE**

VERFAHREN ZUR STEUERUNG EINER SATELLITENAUSRICHTUNG UND SATELLIT MIT GESTEUERTER AUSRICHTUNG

METHOD FOR CONTROLLING SATELLITE ATTITUDE, AND ATTITUDE-CONTROLLED SATELLITE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **09.06.2008 FR 0853802**

(43) Date de publication de la demande:
**16.02.2011 Bulletin 2011/07**

(73) Titulaire: **ASTRIUM SAS**
**92150 Suresnes (FR)**

(72) Inventeurs:
• **SEMBÉLY, Xavier**
**F-31400 Toulouse (FR)**
• **LAGADEC, Kristen**
**F-12120 Centres (FR)**

(74) Mandataire: **Fourcade, Emmanuelle**
**Schmit-Chrétien SNC**
**Parc de Basso Cambo**
**4 Rue Paul Mesplé**
**31100 Toulouse (FR)**

(56) Documents cités:
**EP-A- 0 807 578**     **EP-A- 1 104 896**
**WO-A-00/26084**

• **BITTNER ET AL: "THE ATTITUDE DETERMINATION AND CONTROL SUBSYSTEM OF THE INTELSAT V SPACECRAFT" ATTITUDE AND ORBIT CONTROL SYSTEMS. PROCEEDINGS OF ACONFERENCE, XX, XX, 3 novembre 1977 (1977-11-03), pages 1-20, XP002016388**

## Description

La présente invention appartient au domaine des satellites en orbite autour d'un corps céleste, et concerne plus particulièrement la commande d'attitude de tels satellites pour satisfaire des contraintes de puissance, de dissipation thermique et d'exclusion liées au Soleil. Le document EP 1104896 A1 décrit un tel satellite et est considéré comme l'art antérieur le plus proche.

Les satellites qui font de l'observation du corps céleste autour duquel ils sont en orbite embarquent une charge utile active comportant au moins un instrument d'observation, dirigé vers ledit corps céleste, et dont l'alimentation électrique est généralement assurée par des générateurs solaires comportant un ou des panneaux solaires, dont le fonctionnement optimal est obtenu lorsque les rayons du Soleil sont sensiblement orthogonaux à la surface active des panneaux solaires.

Pour l'observation de la Terre, on considère de nos jours des satellites placés notamment sur des orbites géostationnaires ou quasi-géostationnaires (pour lesquelles le plan d'orbite est peu incliné par rapport au plan équatorial, en pratique d'un angle de valeur inférieure à 15°).

Pour des satellites placés sur de telles orbites, l'orientation nécessaire des panneaux solaires par rapport au Soleil est généralement assurée à la fois par commande de l'attitude desdits satellites, et par rotation desdits panneaux solaires autour d'un ou plusieurs axes en munissant lesdits panneaux solaires d'un ou plusieurs mécanismes d'entraînement (dits MEGS pour Mécanismes d'Entraînement des Générateurs Solaires).

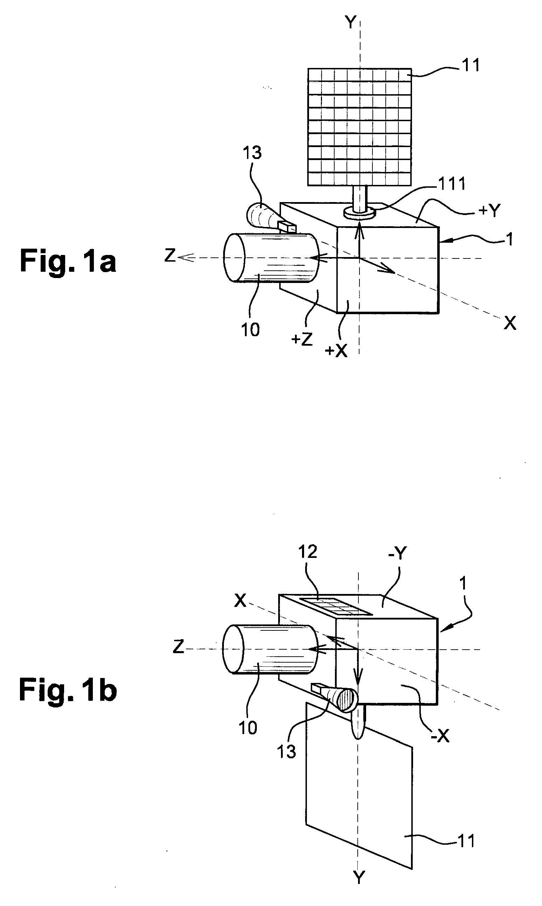

Les figures 1a et 1b montrent un exemple de satellite 1 représentatif des aménagements des équipements de tels satellites, qui comporte notamment un instrument d'observation 10 et un panneau solaire 11.

Un repère associé au satellite 1 est déterminé par trois axes orthogonaux orientés, couramment appelés axe de roulis X, axe de tangage Y et axe de lacet Z.

L'axe Z correspond par exemple à la direction de visée de l'instrument d'observation 10. L'axe Y correspond par exemple à un axe de rotation du panneau solaire 11, muni d'un MEGS 111.

Les satellites d'observation concernés par l'invention sont ceux qui utilisent le pointage de l'ensemble du satellite pour viser différentes zones à observer sur la surface de la Terre, c'est-à-dire qui dirigent l'axe Z de l'instrument d'observation 10 vers lesdites zones, par commande de l'attitude du satellite en tangage (rotation autour de l'axe Y) et en roulis (rotation autour de l'axe X).

De plus les satellites plus particulièrement concernés par l'invention effectuent leur mission d'observation de la Terre pendant une période d'activité représentant un pourcentage de temps important de la période orbitale, typiquement compris entre 50% et 70% de ladite période orbitale, la période d'activité étant définie comme une période au cours de laquelle s'enchaînent des phases de manoeuvres en attitude du satellite, et des phases d'observation proprement dites.

L'attitude des satellites placés en orbite géostationnaire (notamment les satellites de télécommunications), est généralement commandée pour maintenir l'axe Y du satellite toujours orthogonal au plan d'orbite. Cette solution n'est pas adaptée car elle n'offre qu'un degré de liberté (en tangage) pour diriger l'axe Z vers les différentes zones à observer.

Les satellites d'observation de la Terre courants, placés en orbite inclinée, observent eux la Terre pendant un pourcentage de temps limité de la période orbitale, de sorte que l'ensoleillement des panneaux solaires est optimisé uniquement hors période d'activité.

Cette solution n'est pas adaptée aux satellites d'observation qui observent la Terre pendant 50% ou plus de la période orbitale, et doivent de ce fait assurer l'ensoleillement des panneaux solaires y compris en période d'activité afin d'assurer une alimentation électrique de la charge utile.

De plus, les lois actuelles de commande d'attitude tiennent compte uniquement de la contrainte liée à l'ensoleillement des panneaux solaires, tandis que le bon fonctionnement d'autres équipements dépend également de contraintes liées au Soleil. C'est le cas par exemple des radiateurs destinés à évacuer la chaleur dégagée par les équipements du satellite, dont la capacité de réjection thermique dépend du flux solaire qu'ils absorbent, et également des senseurs stellaires, utilisés notamment pour estimer l'attitude des satellites, qui ne doivent pas être dirigés vers le Soleil.

Il n'existe donc pas actuellement de loi performante de commande de l'attitude de satellites d'observation de la Terre faisant de l'observation sur des zones différentes à la surface de la Terre pendant de longues périodes d'activité, qui satisfasse les différentes contraintes liées au soleil pendant lesdites périodes d'activité.

La présente invention telle que décrite par les caractéristiques des revendications 1 et 10 résout les problèmes susmentionnés en introduisant un procédé de commande d'attitude de satellite en orbite autour d'un corps céleste, destiné à être mis en oeuvre par un satellite comportant au moins un instrument d'observation, un panneau solaire, un radiateur et un senseur stellaire qui sont agencés sur le satellite de sorte que, dans un repère associé au satellite et déterminé par trois axes X, Y, Z orthogonaux entre eux :

- l'axe d'observation de l'instrument d'observation est parallèle à l'axe Z,
- le panneau solaire est parallèle à l'axe Y,
- le radiateur est agencé sur une des faces -X, +Y ou -Y du satellite,
- le senseur stellaire est dirigé du côté du demi-espace correspondant aux X négatifs.

Selon le procédé, au cours d'une période d'activité, l'attitude du satellite est commandée en roulis autour de l'axe X et en tangage autour de l'axe Y pour orienter une direction z(t) de l'axe d'observation de l'instrument d'observation vers une ou des zones à observer du corps céleste. L'attitude en lacet autour de l'axe Z du satellite est commandée pour maintenir le Soleil du côté du demi-espace correspondant aux X positifs et pour assurer qu'une contrainte C1 d'ensoleillement minimal du panneau solaire est vérifiée au cours de phases d'observation de la période d'activité, pour assurer une alimentation électrique de la charge utile du satellite en phase d'observation.

De préférence, l'attitude en lacet du satellite est également commandée de sorte qu'une contrainte C2 d'ensoleillement maximal du radiateur et/ou une contrainte C3 d'ensoleillement maximal du senseur stellaire est vérifiée au cours des phases d'observation, pour assurer respectivement une dissipation thermique par le radiateur et une protection du senseur stellaire.

Pour limiter d'éventuelles perturbations mécaniques en phase d'observation, l'attitude en lacet du satellite et/ou l'orientation du panneau solaire est, dans des modes particuliers, sensiblement constante au cours d'au moins une phase d'observation.

Dans un mode particulier de mise en oeuvre du procédé, l'attitude en lacet du satellite est commandée au cours de la période d'activité de sorte qu'une direction $\vec{y}(t)$ de l'axe Y est orientée suivant le produit vectoriel :

$$\vec{y}(t) = \alpha \vec{z}(t) \wedge \vec{s}(t),$$

où $\alpha$ est un facteur de normalisation et s(t) est la direction du Soleil par rapport audit satellite.

Suivant d'autres modes de mise en oeuvre du procédé, l'attitude en lacet du satellite est commandée au cours de la période d'activité de sorte que :

-    une norme des variations en lacet effectuées entre des instants prédéfinis de ladite période d'activité est minimisée,
-    seules des rotations multiples de 90° sont autorisées,
-    seules des rotations multiples de 180° sont autorisées.

L'invention concerne également le satellite comportant un système de guidage et de contrôle de l'attitude dudit satellite, et commandé en attitude suivant le procédé.

L'attitude en lacet du satellite est commandée suivant une trajectoire en lacet qui est soit déterminée par des moyens de calcul du satellite, soit téléchargée depuis une station via des moyens de téléchargement dudit satellite.

Un agencement particulièrement avantageux du satellite commandé en attitude suivant le procédé consiste à placer le radiateur sur la face -X dudit satellite.

Dans le cas où le panneau solaire du satellite est fixe, en dehors éventuellement des opérations de déploiement, ledit panneau solaire est agencé de sorte qu'une direction normale à une surface active dudit panneau solaire fait avec la direction de l'axe Z un angle de valeur comprise entre 90° et 180°.

Dans le cas où le satellite comporte une pluralité de panneaux solaires fixes, en dehors éventuellement des opérations de déploiement, ceux-ci sont agencés de sorte qu'une direction moyenne des directions normales aux surfaces actives desdits panneaux solaires, éventuellement pondérées par les superficies des panneaux solaires, fait avec la direction de l'axe Z un angle de valeur comprise entre 120° et 150°.

La description suivante de modes de réalisation de l'invention est faite en se référant aux figures qui représentent de manière non limitative :

-    Figures 1a et 1 b : deux vues schématiques en perspective d'un satellite d'observation,
-    Figures 2a, 2b, 2c et 2d : des représentations schématiques d'exemples de trajectoires en lacet d'un satellite selon quatre modes de mise en oeuvre d'un procédé de commande d'attitude selon l'invention,
-    Figures 3a et 3b : deux vues schématiques en perspective d'un premier exemple de réalisation d'un satellite d'observation selon l'invention,
-    Figures 4a et 4b : deux vues schématiques en perspective d'un second exemple de réalisation d'un satellite d'observation selon l'invention.

La présente invention concerne un procédé de commande d'attitude de satellite, qui est applicable à tout satellite, notamment d'observation, en orbite autour d'un corps céleste.

Pour les besoins de la description de modes de l'invention, on considère dans la suite de la description le cas d'une application à des satellites d'observation de la Terre, notamment des satellites placés en orbite géostationnaire ou quasi-géostationnaire.

Un tel satellite 1, comme représenté sur les figures 1 a et 1 b, comporte de façon connue au moins :

-    un instrument d'observation 10,
-    un panneau solaire 11,
-    un radiateur 12,
-    un senseur stellaire 13, utilisé notamment pour estimer l'attitude du satellite 1 et généralement dirigé vers une zone du ciel.

Une direction normale à une surface active du panneau solaire 11 est égale à une direction $\vec{s}(t)$ du Soleil par rapport au satellite 1 lorsque les rayons du Soleil ont une incidence normale sur ladite surface active du panneau solaire 11. De même une direction normale à une surface de dissipation du radiateur 12 est égale à la direction $\vec{s}(t)$ lorsque les rayons du Soleil ont une incidence normale sur ladite surface de dissipation.

Un repère associé au satellite 1 est déterminé par trois axes orthogonaux orientés, couramment appelés axe de roulis X, axe de tangage Y et axe de lacet Z, dont les directions sont notées respectivement $\vec{x}(t)$, $\vec{y}(t)$ et $\vec{z}(t)$.

L'attitude du satellite peut être définie par rapport à un repère inertiel, ou par rapport au repère orbital local, par le biais de différentes représentations classiques : quaternions, matrices de passage, ou angles d'Euler.

Par convention, on parlera dans la suite de l'exposé d'angle roulis, d'angle tangage et d'angle lacet lorsque l'attitude est définie par des angles d'Euler, comme étant les angles de rotation autour des axes respectivement X, Y et Z du repère associé au satellite. Cette convention est utilisée pour des besoins de simplification de la description, et il est entendu que l'invention est applicable avec toute autre représentation mathématiquement équivalente de l'attitude du satellite 1.

Les directions $\vec{x}(t)$, $\vec{y}(t)$ et $\vec{z}(t)$ définissent des faces +X, -X, +Y, -Y, +Z, et -Z du satellite 1.

L'instrument d'observation 10, qui est par exemple agencé sur la face +Z du satellite 1, a pour axe d'observation l'axe Z, et l'axe Y est parallèle au panneau solaire 11.

Des faces possibles pour porter le radiateur 12 sont les faces +Y, -Y et -X. Dans l'exemple représenté sur la figure 1 b, le radiateur 12 est placé sur la face -Y du satellite 1, c'est-à-dire la face du satellite 1 se trouvant du côté des Y négatifs dans le repère associé audit satellite.

Le senseur stellaire 13 est dirigé du côté du demi-espace correspondant aux X négatifs.

L'attitude du satellite 1 est commandée par rotation en roulis, en tangage et en lacet autour des axes respectivement X, Y et Z.

Le satellite 1 observe la Terre au cours de périodes dites d'activité, chaque période d'activité consistant généralement en un intervalle de temps de la période orbitale au cours duquel le satellite 1 survole des zones de jour, représentant par exemple 50% à 70% de la période orbitale.

Au cours d'une période d'activité, le procédé commande l'attitude du satellite 1 en tangage et en roulis suivant un plan de mission d'observation décrivant différentes zones à la surface de la Terre vers lesquelles l'axe Z de l'instrument 10 d'observation doit être dirigé à des instants préétablis.

Chaque zone à la surface de la Terre est observée au cours d'une phase d'observation et, entre deux phases d'observation, la direction z(t) de l'axe Z est modifiée au cours d'une phase de manoeuvre.

Le plan de mission d'observation du satellite 1 imposant l'attitude dudit satellite en tangage et en roulis en phase d'observation, le seul degré de liberté restant en attitude est la valeur de l'angle lacet autour de l'axe Z.

Suivant le procédé de l'invention, l'attitude en lacet du satellite est commandée de sorte qu'en phase d'observation un produit scalaire entre la direction $\vec{s}(t)$ du Soleil et la direction $\vec{x}(t)$ de l'axe X est positif ou nul, ce qui revient à conserver en phase d'observation le Soleil dans le demi-espace correspondant aux X positifs dans le repère associé au satellite.

L'attitude en lacet du satellite 1 est en outre commandée de sorte qu'une contrainte C1 d'ensoleillement minimal du panneau solaire 11 est vérifiée au moins en phase d'observation.

La contrainte C1 vise à assurer que l'ensoleillement du panneau solaire est supérieur à un ensoleillement minimal, pour assurer une alimentation électrique de la charge utile en phase d'observation.

Par exemple, la contrainte C1 est vérifiée lorsque la valeur absolue du cosinus d'un angle pris entre les directions $\vec{y}(t)$ et $\vec{s}(t)$ est inférieure à une valeur V1 positive ou nulle. La valeur V1 est de préférence comprise entre 0 (valeur optimale pour l'ensoleillement desdits panneaux solaires, pour laquelle les directions $\vec{y}(t)$ et $\vec{s}(t)$ sont orthogonales) et cos(70°).

Dans un mode préféré de mise en oeuvre du procédé, l'attitude en lacet du satellite 1 est commandée de sorte qu'au moins une contrainte parmi les contraintes suivantes est également satisfaite au moins en phase d'observation :

- une contrainte C2 d'ensoleillement maximal du radiateur 12 ;
- une contrainte C3 d'ensoleillement maximal du senseur stellaire 13.

La contrainte C2 vise à assurer que l'ensoleillement du radiateur 12 est inférieur à un ensoleillement maximal, pour assurer une dissipation thermique suffisante par le radiateur 12 en phase d'observation.

Par exemple, la contrainte C2 est vérifiée lorsque la valeur du cosinus d'un angle pris entre la direction normale à la surface de dissipation dudit radiateur et la direction $\vec{s}(t)$ est inférieure à une valeur V2. La valeur V2 est de préférence comprise entre 0 (valeur en dessous de laquelle la dissipation thermique est optimale) et cos(70°).

La contrainte C3 vise à assurer que l'ensoleillement du senseur stellaire 13 est inférieur à un ensoleillement maximal, pour garantir que le Soleil n'est pas dans un cône de garde du senseur stellaire 13 en phase d'observation.

Par exemple, la contrainte C3 est vérifiée lorsque la valeur du cosinus d'un angle pris entre la direction de visée du senseur stellaire 13 et la direction $\vec{s}(t)$ du Soleil est inférieure à une valeur V3. La valeur V3 est de préférence comprise entre cos(60°) et cos(40°).

D'autres expressions sont possibles pour les contraintes C1, C2 et C3. Par exemple des expressions basées directement sur les valeurs des différents angles (et non leurs cosinus), ou des expressions considérant des angles différents sont possibles, du moment que les objectifs visés par les contraintes (c'est-à-dire, ensoleillement minimal du panneau solaire 11, ensoleillement maximal du radiateur 12 et du senseur stellaire 13) sont atteints.

Dans un mode particulier de mise en oeuvre du procédé, l'attitude en lacet du satellite 1 est sensiblement constante en phase d'observation, de façon à éviter les perturbations mécaniques d'une part (éventuellement introduites par les manoeuvres en lacet), et une rotation de l'instrument d'observation 10 en phase d'observation d'autre part.

Par « attitude en lacet sensiblement constante », on entend que l'on cherche à avoir une valeur constante de l'angle lacet, mais qu'en pratique la valeur de l'angle lacet du satellite 1 peut fluctuer autour de ladite valeur constante, notamment du fait de perturbations extérieures.

Dans ce mode, l'attitude en lacet est modifiée au cours d'une phase de manoeuvre de sorte que les contraintes considérées sont vérifiées au cours de la phase d'observation suivante.

Dans un autre mode particulier, le panneau solaire 11 est maintenu, au moins en phase d'observation, avec une orientation sensiblement constante dans le repère associé au satellite 1, de sorte à éviter d'éventuelles perturbations mécaniques liées à une rotation du panneau solaire 11. Il n'est pas exclu, en outre, d'avoir une orientation du panneau solaire 11 sensiblement constante sur plusieurs phases d'observation consécutives (et pendant les phases de manoeuvre intercalées).

On entend par « orientation sensiblement constante » qu'on cherche à avoir une orientation constante du panneau solaire 11, mais qu'en pratique l'orientation dudit panneau solaire peut fluctuer autour de ladite orientation constante, notamment du fait de perturbations extérieures.

Dans le cas où le panneau solaire 11 est muni d'un MEGS 111, l'orientation du panneau solaire 11 est par exemple modifiée au cours d'une phase de manoeuvre de sorte que la contrainte C1 est vérifiée au cours de la phase d'observation suivante.

Dans le cas où le panneau solaire 11 est dépourvu de MEGS, l'orientation sensiblement constante du panneau solaire est choisie par conception de façon à avoir un angle entre la direction normale à la surface active dudit panneau solaire 11 et la direction z(t) de l'axe Z de valeur comprise entre 90° et 180° dans le plan orienté (Z,X) (la direction $\vec{x}(t)$ correspond à une valeur de 90° et la direction $-\vec{z}(t)$ correspond à une valeur de 180°).

Dans le cas où le panneau solaire 11 est dépourvu de MEGS, la contrainte C1 d'ensoleillement minimal du panneau solaire 11 est par exemple vérifiée lorsque la valeur du cosinus d'un angle pris entre la direction normale à la surface active dudit panneau solaire et la direction $\vec{s}(t)$ est supérieure à une valeur V4. La valeur V4 est de préférence comprise entre cos(20°) et 1 (valeur optimale).

Dans le cas plus général où le satellite 1 comporte une pluralité de panneaux solaires, et/ou une pluralité de radiateurs, et/ou une pluralité de senseurs stellaires, les contraintes C1, C2 et C3 sont vérifiées par au moins un panneau solaire, et/ou au moins un radiateur, et/ou au moins un senseur stellaire.

Pour commander l'attitude en lacet du satellite 1, on détermine une trajectoire en lacet $\psi(t)$ en tenant compte des contraintes considérées notamment parmi les contraintes C1, C2 et C3, qui sont converties en contraintes sur la valeur de l'angle lacet. Ladite conversion est réalisée en considérant l'attitude du satellite 1 en tangage et en roulis imposée par le plan de mission d'observation.

Des trajectoires limites supérieure $\psi_M(t)$ et inférieure $\psi_m(t)$ sont déterminées par cette conversion. Les trajectoires limites $\psi_M(t)$ et $\psi_m(t)$ sont telles qu'une trajectoire en lacet $\psi(t)$ telle que $\psi_m(t) \leq \psi(t) \leq \psi_M(t)$ en phase d'observation vérifie les contraintes considérées.

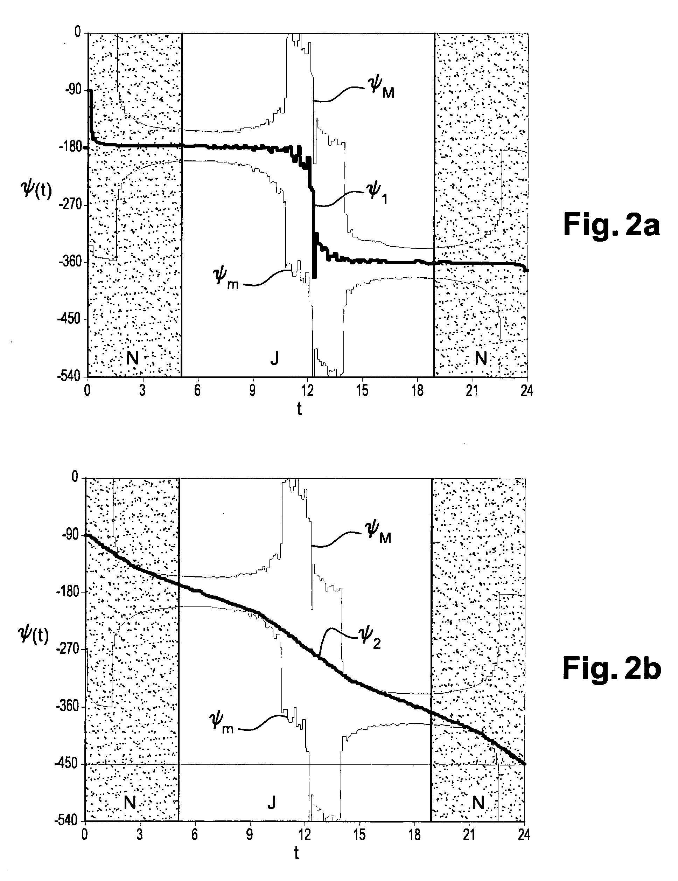

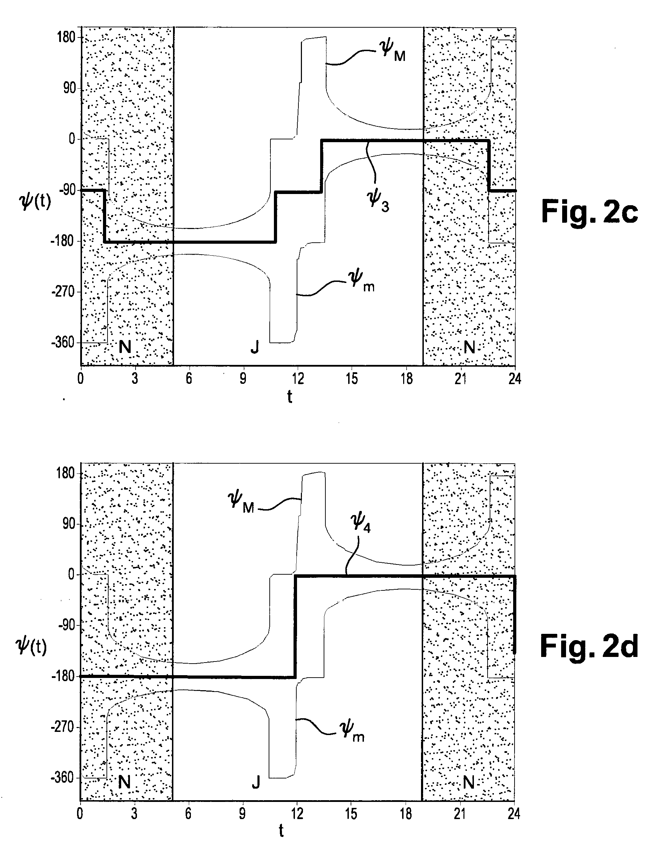

Des exemples de trajectoires limites supérieure $\psi_M(t)$ et inférieure $\psi_m(t)$ sont représentés sous les références respectivement $\psi_M$ et $\psi_m$ sur les figures 2a, 2b, 2c et 2d, qui représentent les valeurs de l'angle lacet $\psi(t)$, exprimées en degrés, en fonction du temps t, exprimé en heures.

La trajectoire en lacet $\psi(t)$ à mettre en oeuvre pour commander l'attitude en lacet du satellite 1 est ensuite déterminée entre les trajectoires limites supérieure $\psi_M(t)$ et inférieure $\psi_m(t)$, au moins pour la période d'activité, en tenant compte le cas échéant des contraintes d'attitude en lacet du satellite 1 sensiblement constante au cours des phases d'observation.

Dans un mode particulier du procédé, l'attitude en lacet du satellite 1 est commandée en période d'activité de sorte à optimiser l'ensoleillement du panneau solaire 11.

La trajectoire en lacet $\psi(t)$ correspondante est déterminée en orientant l'axe Y en fonction du plan de mission d'observation, pour déterminer pour la direction $\vec{z}(t)$ de l'axe Z la direction $\vec{y}(t)$ de l'axe Y suivant la loi vectorielle :

$$\vec{y}(t) = \alpha \vec{z}(t) \wedge \vec{s}(t)$$

expression dans laquelle ∧ représente le produit vectoriel et $\alpha$ est un facteur de normalisation égal à $1/\|\vec{z}(t) \wedge \vec{s}(t)\|$ si $\vec{y}(t)$ est un vecteur unitaire.

Un exemple de trajectoire en lacet ainsi déterminée est représenté sur la figure 2a sous la référence $\psi_1$.

Suivant la loi vectorielle précédente, le Soleil est toujours dans le plan (Z,X), et les directions $\vec{y}(t)$ et $\vec{s}(t)$ sont orthogonales, ce qui est optimal pour l'ensoleillement du panneau solaire 11. En outre, le Soleil est toujours dans le demi-espace correspondant aux X positifs, ce qui est optimal pour le senseur stellaire 13 qui est dirigé vers le demi-espace correspondant aux X négatifs, et les rayons du Soleil sont avantageusement orthogonaux à la direction normale à la surface active du radiateur 12.

Dans un autre mode de mise en oeuvre du procédé, l'attitude en lacet du satellite 1 est commandée en période d'activité de sorte à minimiser les variations nécessaires en lacet entre des instants t(m) de la période d'activité, $1 \leq m \leq M$.

La variation en lacet entre deux instants t(m+1) et t(m), pour lesquels l'angle lacet vaut respectivement $\psi(m+1)$ et $\psi(m)$, est définie par $(\psi(m+1) - \psi(m))/(t(m+1) - t(m))$.

Au moins M-1 variations en lacet sont à déterminer, et la trajectoire en lacet $\psi(t)$ est déterminée en minimisant une norme des variations en lacet, ladite norme étant considérée dans un espace de dimension M-1, sous la contrainte des trajectoires limites supérieure $\psi_M(t)$ et inférieure $\psi_m(t)$, c'est-à-dire en imposant $\psi_m(m) \leq \psi(m) \leq \psi_M(m)$ $(1 \leq m \leq M)$.

La trajectoire en lacet $\psi(t)$ est par exemple déterminée en minimisant la norme 1 des variations en lacet, c'est-à-dire en minimisant l'expression :

$$\sum_{m=1}^{M-1} \frac{|\psi(m+1) - \psi(m)|}{t(m+1) - t(m)}.$$

Un exemple d'une telle trajectoire est représenté sur la figure 2b, sous la référence $\psi_2$.

Dans un autre mode particulier de mise en oeuvre du procédé, l'attitude en lacet du satellite 1 est commandée en période d'activité de sorte que seuls des basculements multiples de 90° sont autorisés, c'est-à-dire que l'angle lacet ne peut prendre que 4 valeurs différentes.

La trajectoire en lacet $\psi(t)$ ainsi obtenue est particulièrement avantageuse dans le cas où le satellite 1 observe de façon régulière au cours de la période d'activité une ou plusieurs zones de la surface de la Terre, notamment dans le cas où l'instrument d'observation 10 comporte comme senseur principal un capteur de forme carrée, et pour une mission d'observation en orbite géostationnaire.

Dans ce cas, les images obtenues pour une même zone après des rotations en lacet soit nulles soit correspondant à des basculements multiples de 90° se recouvrent, ce qui introduit notamment les avantages suivants :

- une surface utile des images, c'est-à-dire la portion de la zone observée présente dans toutes les images, qui est maximisée par rapport à des rotations en lacet sans contraintes qui tendent à limiter la surface utile des images à un disque inscrit au centre desdites images ;
- des traitements pour recadrer les images qui sont réduits à de simples basculements de 90°.

Un exemple d'une telle trajectoire en lacet est représenté sur la figure 2c sous la référence $\psi_3$.

Dans une variante du mode de mise en oeuvre précédent, l'attitude en lacet du satellite 1 est commandée en période d'activité de sorte que seuls des retournements de 180° sont autorisés, c'est-à-dire que l'angle lacet ne peut prendre que 2 valeurs différentes. Cette variante présente les mêmes avantages que précédemment dans le cas où l'instrument d'observation 10 comporte comme senseur principal un détecteur ligne réalisant les images par balayage.

Un exemple d'une telle trajectoire en lacet est représenté sur la figure 2d sous la référence $\psi_4$.

Hors période d'activité, l'attitude du satellite 1 est par exemple commandée en considérant une direction de l'axe Z constante, par exemple un pointage géocentrique ou la direction correspondant à la première zone observée d'une prochaine phase d'observation, et en mettant en oeuvre une trajectoire lacet suivant l'un des modes précédents.

Sur les figures 2a, 2b, 2c et 2d, les intervalles de temps hors périodes d'activité sont représentés par la référence N (approximativement entre 19 heures du soir et 5 heures du matin heures locales, c'est-à-dire lorsque le satellite survole des zones de nuit), tandis que la période d'activité est représentée par la référence J.

L'invention concerne également le satellite commandé en attitude suivant le procédé, comme par exemple le satellite 1 muni d'un MEGS 111 représenté sur les figures 1 a et 1 b.

Le satellite 1 comporte un système de guidage et de contrôle de l'attitude en fonction du plan de mission et de la trajectoire en lacet $\psi(t)$.

La trajectoire lacet $\psi(t)$ est soit déterminée par des moyens de calcul (microcontrôleur, ordinateur muni d'un microprocesseur, etc.) du satellite 1, soit déterminée par une station, pouvant être une station terrestre ou un autre satellite, et transmise de ladite station vers le satellite 1, qui comporte le cas échéant des moyens de téléchargement d'au moins ladite trajectoire lacet, par exemple un dispositif de télécommunications radioélectrique ou optique.

Un aménagement particulièrement avantageux du ou des panneaux solaires et du ou des radiateurs d'un satellite commandé en attitude suivant le procédé de l'invention est décrit ci-après.

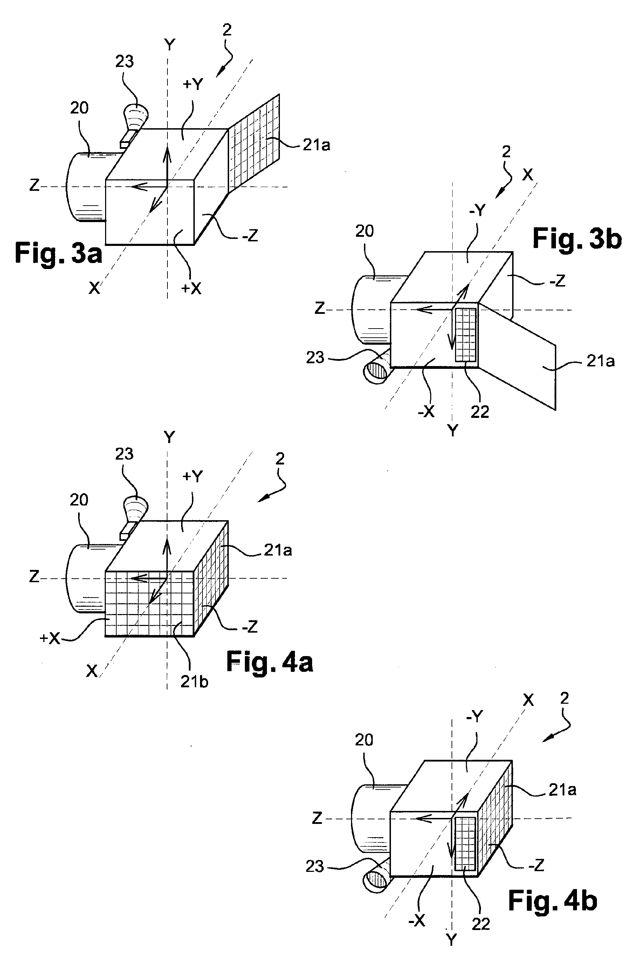

Un satellite 2, représenté sur les figures 3a et 3b, comporte au moins :

- un instrument d'observation 20,
- un panneau solaire 21 a,
- un radiateur 22,
- un senseur stellaire 23.

Comme pour le satellite 1, un repère associé au satellite 2 est déterminé par trois axes orthogonaux orientés X, Y et Z, de directions respectivement $\vec{x}(t)$, $\vec{y}(t)$ et $\vec{z}(t)$, définissant des faces +X, -X, +Y, -Y, +Z et -Z du satellite 2.

L'axe Z est parallèle à un axe d'observation de l'instrument d'observation 20 (par exemple agencé sur la face +Z du satellite 2), et l'axe Y est parallèle au panneau solaire 21 a.

Comme le satellite 1, le satellite 2 comporte un système de guidage et de contrôle de l'attitude du satellite en fonction du plan de mission et de la trajectoire en lacet ψ(t), et ladite trajectoire lacet est soit déterminée par des moyens de calcul du satellite 2, soit téléchargée depuis une station via des moyens de téléchargement.

De préférence, le radiateur 22 est agencé sur la face -X du satellite 2, comme représenté sur la figure 3b.

Le panneau solaire 21a, sensiblement plan et rigide, est fixé à l'interface entre les faces -X et -Z du satellite 2. Le panneau solaire 21 a est dépourvu de MEGS, et a une orientation fixe dans le repère (X,Y,Z). Le satellite 2 dispose éventuellement de moyens pour déployer ledit panneau solaire lorsque ledit satellite est placé sur orbite, mais l'orientation dudit panneau solaire est fixe après les opérations de déploiement.

Le panneau solaire 21 a est agencé de sorte qu'un angle entre une direction normale à une surface active dudit panneau solaire et la direction de l'axe Z a une valeur comprise entre 90° et 180°, par exemple 135°.

En considérant une période d'activité représentant moins de 70% de la période orbitale correspondant au survol par le satellite des zones de jour, le Soleil est globalement en arrière du satellite 2 par rapport à l'axe Z dudit satellite en période d'activité de sorte que la face -Z est ensoleillée presque en permanence.

De plus le satellite 2 est commandé en lacet de sorte que le Soleil se trouve dans le demi-espace correspondant aux X positifs, et la face +X est ensoleillée presque en permanence.

La direction moyenne du Soleil en période d'activité, dans le plan (Z,X), est donc comprise entre les directions $-\vec{z}(t)$ et $\vec{x}(t)$, et fait avec la direction $z(t)$ de l'axe Z un angle compris entre 90° et 180°, de valeur proche de 135°. La direction moyenne du Soleil dans le plan (Z, X) est donc proche de la direction normale à la surface active du panneau solaire 21 a du satellite 2 selon l'invention, assurant ainsi l'ensoleillement presque permanent en période d'activité du panneau solaire 21 a fixe, sans nécessiter de MEGS.

Pour compenser la perte d'incidence normale instantanée des rayons du Soleil sur le panneau solaire 21 a, la superficie de la surface active du panneau solaire 21 a est par exemple sensiblement supérieure à la superficie de la surface active du panneau solaire 11 du satellite 1 muni d'un MEGS.

De manière plus générale, un satellite selon l'invention comporte une pluralité de panneaux solaires, qui sont positionnés sur le satellite de sorte que la direction moyenne des directions normales aux surfaces actives desdits panneaux solaires, éventuellement pondérée par les superficies desdites surfaces actives, fait avec la direction de l'axe Z un angle de valeur comprise entre 120° et 150°.

Par exemple, les figures 4a et 4b représentent un mode voisin de réalisation du satellite 2, comportant deux panneaux solaires 21 a et 21 b, dépourvus de MEGS.

Le panneau solaire 21a est agencé sur la face -Z du satellite 2, et le panneau solaire 21 b est agencé sur la face +X dudit satellite. Les deux panneaux solaires 21 a et 21 b ont sensiblement les mêmes superficies, et la direction moyenne de leurs directions normales fait avec la direction de l'axe Z un angle de valeur sensiblement égale à 135°.

L'exemple de réalisation représenté sur les figures 4a et 4b est en outre particulièrement avantageux du fait que les panneaux solaires n'ont pas à être déployés, et ne nécessitent pas de moyens de déploiement.

Le procédé de commande d'attitude selon l'invention permet, pour des satellites faisant de l'observation pendant une période d'activité représentant un pourcentage de temps important de la période orbitale, de combiner observation de la Terre et vérification de contraintes liées au Soleil, et permet également d'avoir des satellites disposant d'aménagements particulièrement simples.

## Revendications

1. Procédé de commande d'attitude d'un satellite (1,2) en orbite autour d'un corps céleste, ledit satellite comportant au moins :

 - un instrument d'observation (10,20),
 - un panneau solaire (11,21a),
 - un radiateur (12,22),
 - un senseur stellaire (13,23),

 agencés sur le satellite (1,2) de sorte que, dans un repère associé audit satellite et déterminé par trois axes X, Y et Z orthogonaux entre eux :

 - l'axe d'observation de l'instrument d'observation (10,20) est parallèle à l'axe Z,
 - le panneau solaire (11,21 a) est parallèle à l'axe Y,
 - le radiateur (12,22) est agencé sur une des faces -X, +Y ou -Y du satellite,
 - le senseur stellaire (13,23) est dirigé du côté du demi-espace correspondant aux X négatifs,

 dans lequel dit procédé l'attitude du satellite (1,2) est commandée au cours d'une période d'activité (J) en roulis autour de l'axe X et en tangage autour de l'axe Y pour orienter une direction $\vec{z}(t)$ de l'axe d'observation de l'instrument d'observation (10,20) vers des zones du corps céleste à observer, ledit procédé étant **caractérisé en ce que** l'attitude en lacet autour de l'axe Z du satellite (1,2) est commandée pour maintenir le Soleil du côté du demi-espace correspondant aux X positifs et pour assurer qu'une contrainte C1 d'ensoleillement minimal du panneau solaire (11,21 a) est vérifiée au cours de phases d'observation de la période d'activité (J).

2. Procédé selon la revendication 1, dans lequel l'attitude en lacet du satellite (1,2) est commandée de sorte qu'une contrainte C2 d'ensoleillement maximal du radiateur (12,22) est vérifiée au cours des phases d'observation.

3. Procédé selon la revendication 1 ou 2, dans lequel l'attitude en lacet du satellite (1,2) est commandée de sorte qu'une contrainte C3 d'ensoleillement maximal du senseur stellaire (13,23) est vérifiée au cours des phases d'observation.

4. Procédé selon l'une des revendications précédentes, dans lequel l'attitude en lacet du satellite (1,2) est sensiblement constante au cours d'au moins une phase d'observation.

5. Procédé selon l'une des revendications précédentes, dans lequel l'orientation du panneau solaire (11,21 a) est sensiblement constante dans le repère associé au satellite (1,2) au cours d'au moins une phase d'observation.

6. Procédé selon l'une des revendications précédentes, dans lequel l'attitude en lacet du satellite (1,2) est commandée au cours de la période d'activité (J) de sorte que, pour chaque zone à observer, une direction $\vec{y}(t)$ de l'axe Y est orientée suivant le produit vectoriel :

$$\vec{y}(t) = \alpha\vec{z}(t) \wedge \vec{s}(t),$$

où $\alpha$ est un facteur de normalisation et s(t) est la direction du Soleil par rapport audit satellite.

7. Procédé selon l'une des revendications 1 à 5, dans lequel l'attitude en lacet du satellite (1,2) est commandée au cours de la période d'activité (J) de sorte qu'une norme des variations en lacet effectuées entre des instants prédéfinis de ladite période d'activité est minimisée.

8. Procédé selon l'une des revendications 1 à 5 dans lequel l'attitude en lacet du satellite (1,2) est commandée au cours de la période d'activité (J) en n'autorisant que des rotations multiples de 90°.

9. Procédé selon l'une des revendications 1 à 5 dans lequel l'attitude en lacet du satellite (1,2) est commandée au cours de la période d'activité (J) en n'autorisant que des rotations multiples de 180°.

10. Satellite (1,2) destiné à être placé en orbite autour d'un corps céleste comportant au moins :

    - un instrument d'observation (10,20),
    - un panneau solaire (11,21 a),
    - un radiateur (12,22),
    - un senseur stellaire (13,23),

    agencés sur le satellite (1,2) de sorte que, dans un repère associé audit satellite et déterminé par trois axes X, Y et Z orthogonaux entre eux :

    - l'axe d'observation de l'instrument d'observation (10,20) est parallèle à l'axe Z,
    - le panneau solaire (11,21 a) est parallèle à l'axe Y,
    - le radiateur (12,22) est agencé sur une des faces -X, +Y ou -Y du satellite,
    - le senseur stellaire (13,23) est dirigé du côté du demi-espace correspondant aux X négatifs,

    **caractérisé en ce que**
    ledit satellite comportant un système de guidage et de contrôle d'attitude dudit satellite suivant le procédé selon les revendications 1 à 9.

11. Satellite (1,2) selon la revendication 10, comportant des moyens de calcul d'une trajectoire lacet utilisée pour commander l'attitude en lacet dudit satellite.

12. Satellite (1,2) selon la revendication 10, comportant des moyens de téléchargement depuis une station d'une trajectoire lacet utilisée pour commander l'attitude en lacet dudit satellite.

13. Satellite (2) selon l'une des revendications 10 à 12, dans lequel le radiateur (22) est agencé sur la face -X dudit satellite.

14. Satellite (2) selon l'une des revendications 10 à 13, dans lequel le panneau solaire (21 a) est fixe en dehors éventuellement des opérations de déploiement, et agencé de sorte qu'une direction normale à une surface active dudit panneau solaire fait avec la direction de l'axe Z un angle de valeur comprise entre 90° et 180°.

15. Satellite (2) selon la revendication 14, comportant une pluralité de panneaux solaires (21 a,21 b) fixes en dehors éventuellement des opérations de déploiement, agencés de sorte qu'une direction moyenne des directions normales aux surfaces actives desdits panneaux solaires, pondérées ou pas par leurs superficies respectives, fait avec la direction de l'axe Z un angle de valeur comprise entre 120° et 150°.

**Patentansprüche**

1.  Verfahren zur Steuerung einer Satellitenausrichtung (1, 2) in einer Umlaufbahn um einen Himmelskörper, wobei der Satellit mindestens umfasst:

    - ein Beobachtungsinstrument (10, 20),
    - ein Solarpanel (11, 21a),
    - einen Radiator (12, 22),
    - einen Stellarsensor (13, 23),

    die auf dem Satelliten (1, 2) derart angeordnet sind, dass in einem Bezugspunkt, der dem Satelliten zugeordnet und durch drei zueinander orthogonale Achsen X, Y und Z bestimmt ist:

    - die Beobachtungsachse des Beobachtungsinstruments (10, 20) zur Achse Z parallel ist,
    - das Solarpanel (11, 21a) zur Achse Y parallel ist,
    - der Radiator (12, 22) auf einer der Seiten -X, +Y oder -Y des Satelliten angeordnet ist,
    - der Stellarsensor (13, 23) zur Seite des halben Raums entsprechend den negativen X gerichtet ist,

    bei welchem Verfahren die Ausrichtung des Satelliten (1, 2) während einer Aktivitätsperiode (J) beim Rollen um die Achse X und beim Schwanken um die Achse Y gesteuert wird, um eine Richtung $\vec{z}(t)$ der Beobachtungsachse des Beobachtungsinstruments (10, 20) zu zu beobachtenden Zonen des Himmelskörpers zu richten, wobei das Verfahren **dadurch gekennzeichnet ist, dass** die Ausrichtung in einer Schleife um die Achse Z des Satelliten (1, 2) derart gesteuert wird, dass die Sonne auf der Seite des halben Raums entsprechend den positiven X gehalten wird, und dass sichergestellt ist, dass eine Belastung C1 einer minimalen Sonneneinstrahlung des Solarpanels (11, 21a) während der Beobachtungsphasen der Aktivitätsperiode (J) verifiziert wird.

2.  Verfahren nach Anspruch 1, bei dem die Schleifenausrichtung des Satelliten (1, 2) derart gesteuert wird, dass eine Belastung C2 einer maximalen Sonneneinstrahlung des Radiators (12, 22) während der Beobachtungsphasen verifiziert wird.

3.  Verfahren nach Anspruch 1 oder 2, bei dem die Schleifenausrichtung des Satelliten (1, 2) derart gesteuert wird, dass eine Belastung C3 einer maximalen Sonneneinstrahlung des Stellarsensors (13, 23) während der Beobachtungsphasen verifiziert wird.

4.  Verfahren nach einem der vorhergehenden Ansprüche, bei dem die Schleifenausrichtung des Satelliten (1, 2) während mindestens einer Beobachtungsphase im Wesentlichen konstant ist.

5.  Verfahren nach einem der vorhergehenden Ansprüche, bei dem die Ausrichtung des Sonnenpanels (11, 21a) während mindestens einer Beobachtungsphase in dem dem Satelliten (1, 2) zugeordneten Bezugspunkt im Wesentlichen konstant ist.

6.  Verfahren nach einem der vorhergehenden Ansprüche, bei dem die Schleifenausrichtung des Satelliten (1, 2) während der Aktivitätsperiode (J) derart gesteuert wird, dass für jede zu beobachtende Zone eine Richtung $\vec{y}(t)$ der Achse Y nach folgendem vektoriellen Produkt ausgerichtet ist:

$$\vec{y}(t) = \alpha \vec{z}(t) \wedge \vec{s}(t) \ ,$$

    wobei $\alpha$ ein Normungsfaktor und $\vec{s}(t)$ die Richtung der Sonne in Bezug zum Satelliten ist.

7.  Verfahren nach einem der Ansprüche 1 bis 5, bei dem die Schleifenausrichtung des Satelliten (1, 2) während der Aktivitätsperiode (J) derart gesteuert wird, dass eine Norm der Schleifenvariationen, die zwischen vordefinierten Zeitpunkten der Aktivitätsperiode ausgeführt werden, minimiert wird.

8.  Verfahren nach einem der Ansprüche 1 bis 5, bei dem die Schleifenausrichtung des Satelliten (1, 2) während der Aktivitätsperiode (J) gesteuert wird, wobei nur Mehrfachdrehungen von 90° gestattet sind.

9.  Verfahren nach einem der Ansprüche 1 bis 5, bei dem die Schleifenausrichtung des Satelliten (1, 2) während der Aktivitätsperiode (J) gesteuert wird, wobei nur Mehrfachdrehungen von 180° gestattet sind.

10. Satellit (1, 2), der dazu bestimmt ist, in einer Umlaufbahn um einen Himmelskörper angeordnet zu werden, mindestens umfassend:

    - ein Beobachtungsinstrument (10, 20),
    - ein Solarpanel (11, 21a),
    - einen Radiator (12, 22),
    - einen Stellarsensor (13, 23),

    die auf dem Satelliten (1, 2) derart angeordnet sind, dass in einem Bezugspunkt, der dem Satelliten zugeordnet und durch drei zueinander orthogonale Achsen X, Y und Z bestimmt ist:

    - die Beobachtungsachse des Beobachtungsinstruments (10, 20) zur Achse Z parallel ist,
    - das Solarpanel (11, 21a) zur Achse Y parallel ist,
- der Radiator (12, 22) auf einer der Seiten -X, +Y oder -Y des Satelliten angeordnet ist,
- der Stellarsensor (13, 23) zur Seite des halben Raums entsprechend den negativen X gerichtet ist,

**dadurch gekennzeichnet, dass** der Satellit ein Führungs- und Kontrollsystem für die Ausrichtung des Satelliten gemäß dem Verfahren nach den Ansprüchen 1 bis 9 umfasst.

**11.** Satellit (1, 2) nach Anspruch 10, umfassend Mittel zur Berechnung einer Schleifenbahn, die verwendet wird, um die Schleifenausrichtung des Satelliten zu steuern.

**12.** Satellit (1, 2) nach Anspruch 10, umfassend Mittel zum Fernladen einer Schleifenbahn von einer Station aus, die verwendet wird, um die Schleifenausrichtung des Satelliten zu steuern.

**13.** Satellit (2) nach einem der Ansprüche 10 bis 12 bei dem der Radiator (22) auf der Seite -X des Satelliten angeordnet ist.

**14.** Satellit (2) nach einem der Ansprüche 10 bis 13, bei dem das Solarpanel (21a) außer eventuell bei Ausbreitungsmaßnahmen fest und derart angeordnet ist, dass eine Richtung normal auf eine aktive Fläche des Solarpanels mit der Richtung der Achse Z einen Winkel mit einem Wert zwischen 90° und 180° bildet.

**15.** Satellit (2) nach Anspruch 14, umfassend eine Vielzahl von Solarpanelen (21a, 21b), die außer eventuell bei Ausbreitungsmaßnahmen fest und derart angeordnet sind, dass eine durchschnittliche Richtung der Richtungen normal auf die aktiven Flächen der Solarpanele, die durch ihre jeweiligen Oberflächen gewichtet sind oder nicht, mit der Richtung der Achse Z einen Winkel mit einem Wert zwischen 120° und 150° bildet.

**Claims**

**1.** Method for controlling the attitude of a satellite (1,2) in orbit around a celestial object, said satellite comprising at least:

  - an observation instrument (10,20),
  - a solar panel (11,21 a),
  - a radiator (12,22),
  - a star sensor (13,23),

arranged on the satellite (1,2) such that, in a reference frame associated with said satellite and defined by three orthogonal axes X, Y, Z:

- the observation axis of the observation instrument (10,20) is parallel to the Z-axis,
- the solar panel (11,21 a) is parallel to the Y-axis,
- the radiator (12,22) is arranged on one of the sides -X, +Y, or -Y of the satellite,
- the star sensor (13,23) is directed toward the half space corresponding to the negative X values,

in which said method, the attitude of the satellite (1,2) is controlled during an activity period (J) around the X-axis for roll control and around the Y-axis for pitch control to point one direction z(t) of the axis of observation of the observation instrument (10,20) towards areas to be observed of the celestial object, said process being **characterized in that** the yaw attitude around the Z-axis of the satellite (1,2) is controlled to keep the Sun on the side of the half-space corresponding to positive X values and to ensure that a minimum insolation of the solar panel (11,21 a) constraint C1 is satisfied during observation phases of the activity period (J).

**2.** Method according to claim 1, wherein the yaw attitude of the satellite (1,2) is controlled such that a radiator (12,22) maximum insolation constraint C2 is satisfied during the observation phases.

**3.** Method according to claim 1 or 2, wherein the yaw attitude of the satellite (1,2) is controlled such that a star sensor (13,23) maximum insolation constraint C3 is satisfied during the observation phases.

**4.** Method according to one of the preceding claims, wherein the yaw attitude of the satellite (1,2) is substantially constant during at least one observation phase.

**5.** Method according to one of the preceding claims, wherein the orientation of the solar panel (11,21 a) is substantially constant in the reference frame associated with the satellite (1,2) during at least one observation phase.

**6.** Method according to one of the preceding claims, wherein the yaw attitude of the satellite (1,2) is controlled during the activity period (J) such that for each area to be observed a direction $\vec{y}(t)$ of the Y-axis is oriented according to the cross product:

$$\vec{y}(t) = \alpha \vec{z}(t) \wedge \vec{s}(t),$$

where $\alpha$ is a normalization factor and $\vec{s}(t)$ is the direction of the Sun with respect to said satellite.

7. Method according to one of claims 1 to 5, wherein the yaw attitude of the satellite (1,2) is controlled during the activity period (J) such that a norm of yaw variations performed between predetermined instants of said activity period is minimized.

8. Method according to one of claims 1 to 5, wherein the yaw attitude of the satellite (1,2) is controlled during the activity period (J) by allowing only rotations in multiples of 90°.

9. Method according to one of claims 1 to 5, wherein the yaw attitude of the satellite (1,2) is controlled during the activity period (J) by allowing only rotations in multiples of 180°.

10. Satellite (1,2) designed to be placed in orbit around a celestial object comprising at least:

   - an observation instrument (10,20),
   - a solar panel (11,21 a),
   - a radiator (12,22),
   - a star sensor (13,23),

   arranged on the satellite (1,2) such that, in a reference frame associated with said satellite and defined by three orthogonal axes X, Y, Z:

   - the observation axis of the observation instrument (10,20) is parallel to the Z-axis,
   - the solar panel (11,21 a) is parallel to the Y-axis,
   - the radiator (12,22) is arranged on one of the sides -X, +Y, or -Y of the satellite,
   - the star sensor (13,23) is directed toward the half space corresponding to the negative X values,

   **characterized in that** said satellite comprising a guidance and attitude control system for controlling the attitude of said satellite using a method according to claims 1 to 9.

11. Satellite (1,2) according to claim 10, comprising means of computing a yaw trajectory used to control the yaw attitude of said satellite.

12. Satellite (1,2) according to claim 10, comprising means of downloading from a station a yaw trajectory used to control the yaw attitude of said satellite.

13. Satellite (2) according to one of claims 10 to 12, wherein the radiator (22) is arranged on the -X side of said satellite.

14. Satellite (2) according to one of claims 10 to 13, wherein the solar panel (21 a) is fixed, except possibly during deployment operations, and arranged such that a direction normal to an active surface of said solar panel makes an angle of between 90 ° and 180 ° with the direction of the Z-axis.

15. Satellite (2) according to claim 14, comprising a plurality of fixed solar panels (21 a,21 b), except possibly during deployment operations, arranged such that a mean direction of directions normal to the active surfaces of said solar panels makes an angle of between 120° and 150° with the direction of the Z-axis.

**Fig. 1a**

**Fig. 1b**

Fig. 2a

Fig. 2b

Fig. 2c

Fig. 2d

Fig. 3a

Fig. 3b

Fig. 4a

Fig. 4b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1104896 A1